# EUROPEAN PATENT SPECIFICATION

(11) **EP 0 825 774 B1**
(45) Date of publication and mention of the grant of the patent: **01.10.2003**
(21) Application number: 97202109.1
(22) Date of filing: 08.07.1997
(51) Int. Cl.: H04N 7/18

(54) **System for transmitting digital video signals by way of a telecommunications network, as well as device**
System und Anordnung zum Übertragen von digitalen Signalen über ein Telekommunikationsnetzwerk
Système et dispositif de transmission de signaux vidéo numériques via un réseau de télécommunication

(30) Priority: 23.08.1996 NL 1003868
(43) Date of publication of application: 25.02.1998
(73) Proprietor: Koninklijke KPN N.V., 9726 AE Groningen (NL)
(72) Inventor: Smit, Michel Jean Paul, 2264 XZ Leidschendam (NL)

(56) References cited:
- DE-A- 4 307 486
- DE-A- 4 428 306
- SKOGMO D: "IMAGE TRANSMISSION SYSTEM (ITS)" PROCEEDINGS OF THE ANNUAL INTERNATIONAL CARNAHAN CONFERENCE ON SECURITY TECHNOLOGY, ALBUQUERQUE, OCT. 12 - 14, 1994, no. CONF. 28, 12 October 1994, SANSON L D, pages 80-85, XP000492107

## Description

### A. BACKGROUND OF THE INVENTION

The invention relates to a system for transmitting digital video signals by way of a telecommunications network, which system is provided with
- camera means for generating the digital video signals,
- a device comprising
   - an input for receiving the digital video signals,
   - an output for coupling to the telecommunications network, and
   - control means.

Such a system is of common knowledge and relates to, e.g., a so-called security camera which, by way of a constantly present telecommunication connection, transmits the digital video signals to an incident room.

Such a system has the drawback, inter alia, that it is not very well applicable to the recording of traffic offences, such as driving too fast and going through a red light, since such offences are generally committed only sporadically and on unpredictable points in time, which requires that the digital video signals must be capable of being transmitted to the incident room 24 hours a day. Although there are on sale security cameras provided with a roll of film, these have the drawback that said roll should be replaced regularly, while generally the security camera is placed in a difficult-to-access location and offences are no longer recorded in the event that a fully exposed roll of film is present in the security camera.

### B. SUMMARY OF THE INVENTION

The object of the invention is, inter alia, to provide a system of the type referred to in the preamble, with which traffic offences may be recorded in an incident room by way of digital video signals originating from the camera means, without said signals having to be capable of being transmitted 24 hours a day.

For this purpose, the system according to the invention is characterised in that the device is provided with
- a memory for storing digital video signals, each of which corresponds to at least one video image.
- a threshold-value circuit coupled to said control means (3) for generating an indication signal in response to the exceeding of a threshold-value signal, which is set in the threshold-value circuit by the control means, by a counter signal output by said control means and representing the total number of stored video image, or in response to the exceeding of a time-interval limit which is set in the threshold-value circuit by the control means, by a counter-position signal originated from clock means and representing the time elapsed since the most recently observed exceeding of the threshold-value signal by the counter signal or the most recently observed exceeding of the time-interval limit by the counter-position signal,
which system is provided with setting-up means for, in response to the indication signal, setting up a telecommunication connection, coupled to the output, by way of the telecommunications network, with digital video signals stored in the memory of the device, after having been read out, being fed to the output and being transmitted by way of the telecommunication connection set up.

By providing the device with the memory and with the threshold-value circuit, while only in response to the indication signal the telecommunication connection is set up by way of the telecommunications network, the digital video signals stored in the . memory may, after having been read out, be fed to the output and be transmitted to the incident room by way of the telecommunication connection set up. In this manner the digital video signals are temporarily stored, and it is no longer necessary on the one hand to continuously keep in operation a telecommunication link once set up (which is expensive), while the incident room need no longer be provided with one input per security camera. The telecommunications network might be, e.g., a so-called ISDN [Integrated Services Digital Network], which comprises a so-called 2B+D channel, with the digital video signals then being capable of being transmitted by way of the telecommunication connection realised by means of a B channel, while the setting up, in response to the indication signal, of such a telecommunication connection might be realised by way of the D channel.

The invention is based, inter alia, on the insight that digital signals may be stored in a memory, while a threshold-value circuit may be used to take a specific initiative, such as the indication that a telecommunication connection should be set up.

Thus, for recording traffic offences, the problem of wanting to apply camera means which generate digital video signals, is solved by providing the device with a memory and with a threshold-value circuit.

It should be noted here that an incident room could be regarded both as a part of the telecommunications network and as an appurtenance thereto.

A first embodiment of the system according to the invention is characterised in that the setting-up means are substantially located in the telecommunications network, which setting-up means are provided with a control input capable of being coupled to a telecommunication link for, by way of the telecommunication link, receiving the indication signal, the threshold-value circuit being provided with an output capable of being coupled to the telecommunication link.

When the setting-up means are placed in the telecommunications network, it may be determined, from the telecommunications network, whether, and when, there should be set up a telecommunication link to a specific device, such of course in response to the indication signal originating from the device in question. In this manner, a diagram might be drawn up by means of a central planner associated with the telecommunications network, by way of which diagram there might consecutively be approached various devices (each of which has already transmitted the indication signal) by way of telecommunication links to be set up, with the purpose of feeding the stored digital video signals to the telecommunications network. The telecommunication link may be formed, e.g., by a so-called radio connection, such as, e.g., a connection based on FM (frequency modulation).

A second embodiment of the system according to the invention is characterised in that the telecommunication link constitutes a part of the telecommunications network.

When the telecommunication link constitutes a part of the telecommunications network, it is a matter of efficient use of the telecommunications network. The telecommunication link may then, e.g., be formed by the D channel of the telecommunications network implemented as ISDN network.

A third embodiment of the system according to the invention is characterised in that the setting-up means are substantially located in the device, which setting-up means are provided with a control input for the coupling to an output of the threshold-value circuit for receiving the indication signal.

When the setting-up means are placed in the device, it may be determined from the device when there should be set up a telecommunication connection with the telecommunications network, of course in response to the indication signal originating from the device in question. In this manner, use may be made of a standard telecommunications network, while it still should be noted that each telecommunications network disposes of the options, e.g., in the event of overload, to (temporarily) inhibit a telecommunication connection to be set up.

A fourth embodiment of the system according to the invention is characterised in that the telecommunication connection to be set up comprises a wireless connection.

When the telecommunication link to be set up comprises a wireless connection, use may be made of GSM/NMT/DECT/TETRA technologies [GSM = Global System for Mobile communications, DECT = Digital European Cordless Telephony, TETRA = Trans European Trunked RAdio], it no longer being necessary to cable the device. As a result, such devices can be placed in even harder-to-access locations, which increases the resistance to vandalism, and makes possible recording from any imaginable location.

A fifth embodiment of the system according to the invention is characterised in that the counter signal signal is at least a function of a number of digital video signals, each of which corresponds to at least one video image.

When the counter signal is a function of a number of digital video signals, the extent to which the memory is filled determines the point in time on which the indication signal should be transmitted. In this manner, it may be decided, well before the memory would be completely filled, that video images must be transmitted to the telecommunications network.

A sixth embodiment of the system according to the invention is characterised in that the counter signal signal is at least a function of a time interval.

When the counter signal is a function of a time interval, said time interval determines the point in time on which the indication signal should be transmitted. In this manner, it may still be decided, regardless of the extent to which the memory is filled, that video images must be transmitted to the telecommunications network.

In reference 1 it is disclosed to couple said camera means to a switched network, such as an ISDN network or a mobile network. In said patent, it is not disclosed to provide the device with, on the one hand, a memory for storing digital video signals, each of which corresponds to at least one video image and with, on the other hand, a threshold-value circuit coupled to the memory for, in response to the exceeding of a threshold-value signal by the value of a time counter or video image counter, generating an indication signal and, in response to said threshold-value signal, to set up a connection with the network.

Reference 2 does neither disclose the transfer of video images only after a counter value -indicating e.g. a number of images or seconds- crosses a (number-of-images or number-of-seconds) threshold: according to reference 2 each individual image is transferred immediately after it has been originated (viz. after any actuation of a road sensor).

The invention further relates to a device for a coupling between camera means and a telecommunications network, comprising
- an input for receiving digital video signals,
- an output for coupling to a telecommunications network
- control means.

The device according to the invention is characterised in that the device is provided with
- a memory for storing digital video signals, each of which corresponds to at least one video image,
- a threshold-value circuit (5) coupled to said control means (3) for generating an indication signal (20)
   in response to the exceeding of a threshold-value signal, which is set (18) in the threshold-value circuit by the control means (3), by a counter signal number output (17) by said control means (3) and representing the total number of stored video images, or in response to the exceeding of a time-interval limit, which is set (19) in the threshold-value circuit by the control means (3), by a counter-position signal originated from clock means and representing the time elapsed since the most recently observed exceeding of the threshold-value signal by the counter signal or the most recently observed exceeding of the time-interval limit by the counter-position signal,
- said control means controlling, in response to the indication signal (20), that said digital video signals stored in the memory of the device, after having been read out, are fed to the output and being transmitted, by way of a telecommunication connection coupled to the output.

A first embodiment of the device according to the invention is characterised in that the settting-up means are substantially located in the telecommunications network, which setting-up means are provided with a control input capable of being coupled to a telecommunication link for, by way of the telecommunication link, receiving the indication signal, the threshold-value circuit being provided with an output capable of being coupled to the telecommunication link.

A second embodiment of the device according to the invention is characterised in that the telecommunication link constitutes a part of the telecommunications network.

A third embodiment of the device according to the invention is characterised in that the setting-up means are substantially located in the device, which setting-up means are provided with a control input for the coupling to an output of the threshold-value circuit for receiving the indication signal.

A fourth embodiment of the device according to the invention is characterised in that the telecommunication connection to be set up comprises a wireless connection.

A fifth embodiment of the device according to the invention is characterised in that the threshold-value signal is at least a function of a number of digital video signals, each of which corresponds to at least one video image.

A sixth embodiment of the device according to the invention is characterised in that the threshold-value signal is at least a function of a time interval.

### C. REFERENCES

1. DE 44 28 306 A1
2. Skogmo D, Image transmission system (ITS), IEEE, Proc. Ann. Int. Carnahan Conf. Sec. Techn, Albuquerque, Oct. 1994, p. 80-85

### D. EXEMPLARY EMBODIMENT

The invention will be explained in greater detail by reference to an exemplary embodiment shown in the Figures. In this connection:

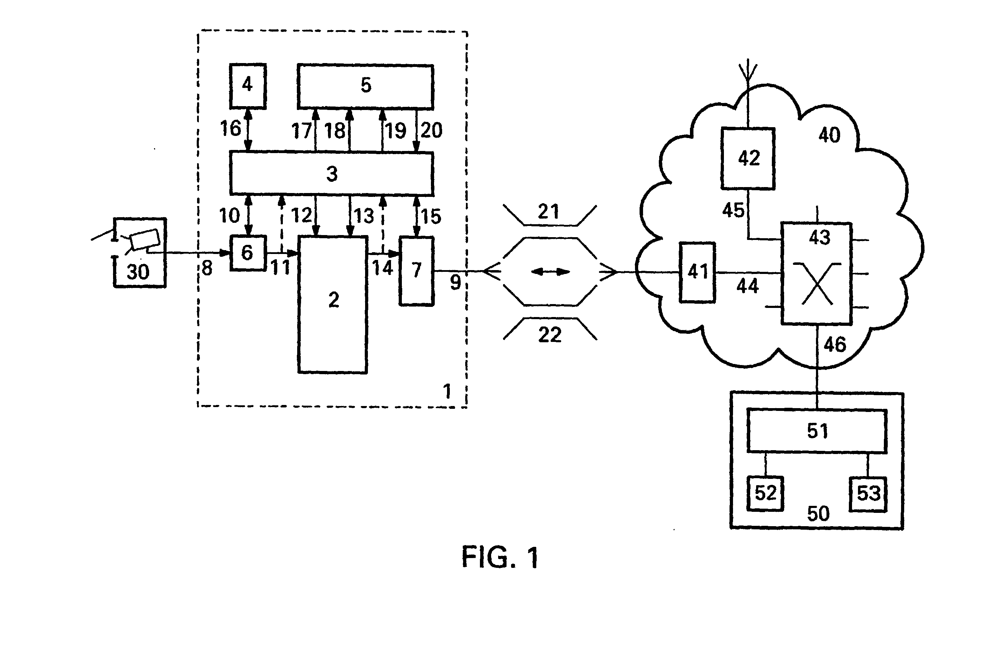

FIG. 1 shows the system according to the invention, comprising a device according to the invention.

The system shown in FIG. 1 according to the invention comprises a device 1 according to the invention, of which an input 8 is connected to camera means 30 and of which an output 9 is capable of being coupled, by way of an antenna and by way of a telecommunication connection comprising a signalling channel 21 and a data channel 22, to an antenna of a base station 41 associated with telecommunications network 40. Base station 41 is coupled, by way of a connection 44, to an exchange 43 which is coupled, by way of a connection 45, to a further base station 42 and which is coupled, by way of a connection 46, to an incident room 50 associated, or not, with the telecommunications network 40. The incident room 50 is provided with an organisation processor 51, which is connected to a first processing circuit 52 and a second processing circuit 53.

The device 1 is provided with a buffer circuit 6, of which an input is coupled to the input 8 of the device 1, and of which an input/output is coupled, by way of a connection 10, to a processor 3, and of which an output is coupled, by way of a connection 11, to an input of memory 2 (and possibly to the processor 3). An address input of memory 2 is connected, by way of a connection 12, to the processor 3, and a read/write input of memory 2 is connected, by way of a connection 13, to the processor 3. An output of memory 2 is coupled, by way of a connection 14, to an input of handset 7 (and possibly to the processor 3). An output of handset 7 is coupled to the output 9 of the device 1, and a control input/output of the handset 7 is coupled, by way of a connection 15, to the processor 3. The device 1 further comprises a table memory 4 of which an input/output is coupled, by way of a connection 16, to the processor 3, and the device 1 comprises a threshold-value circuit 5, of which a first input is coupled, by way of a connection 17, to the processor 3 and of which a second input is coupled, by way of a connection 18, to the processor 3 and of which a third input is coupled, by way of a connection 19, to the processor 3 and of which an output is coupled, by way of a connection 20, to the processor 3.

The operation of the system shown in FIG. 1 is as follows. Known to those skilled in the art and for sale everywhere, the camera means 30 record, e.g., speeders and/or traffic-signal offenders, with video images made of said offenders being fed, as digital video signals, to the device 1 by way of the input 8. The buffer circuit 6 buffers said digital video signals, and informs the processor 3 by way of the connection 10 of the arrival of each video image. In response thereto, the processor 3 by way of the connection 16 instructs the table memory 4 to generate an available memory address for the memory 2. By way of the connection 16, the table memory 4 generates such an available memory address e.g., the address 78, since earlier there had already been stored 77 video images in the memory 2 which address is fed, by way of the connection 12, by the processor 3 to the memory 2. Thereafter, the processor 3 by way of the connection 13 transmits a so-called write signal and the processor 3 by way of the connection 10 instructs the buffer circuit 6 to feed the digital video signals in question, by way of the connection 11, to the memory 2, which stores said digital video signals at the said address.

By way of the connection 17, the processor 3 informs the threshold-value circuit 5 that there have now been stored a total of 78 video images by, e.g., generating a counter signal having the value 78; by way of the connection 18, the processor 3 feeds a threshold-value signal to the threshold-value circuit 5 which, e.g., has the value 100; and by way of the connection 19, the processor 3 feeds a signal to the threshold-value circuit 5 which is representative of a time-interval limit, e.g., a time signal having the value 100,000. The threshold-value circuit compares the counter signal with the threshold-value signal, and observes no exceeding of the threshold-value signal (since 78 < 100). The threshold-value circuit further compares the time signal with an internal counter-position signal (which should be considered a further threshold-value signal here), which internal counter-position signal, e.g., originates from an internal clock which was set to zero at the most recently observed exceeding of the threshold-value signal and which every second increases its counter-position signal by the value one. If, e.g., 90,000 seconds have elapsed since the most recently observed exceeding of the threshold-value signals, the threshold-value circuit observes no exceeding of the counter-position signal (since 90,000 < 100,000). In this manner, once again there is stored a video image of an offender in the memory 2.

As soon as there have been stored 100 video images in the memory 2 and a next offender has been stored by the camera means 30, the following occurs. The buffer circuit 6 buffers the associated digital video signals and informs the processor 3, by way of the connection 10, of the arrival of said video image. In response thereto, the processor 3 by way of the connection 16 instructs the table memory 4 to generate an available memory address for the memory 2. By way of the connection 16, the table memory 4 generates such an available memory address in this case the address 101, since earlier there had already been stored 100 video images in the memory 2 which address is fed, by way of the connection 12, by the processor 3 to the memory 2. Thereafter, the processor 3 by way of the connection 13 transmits a so-called write signal and the processor 3 by way of the connection 10 instructs the buffer circuit 6 to feed the digital video signals in question, by way of the connection 11, to the memory 2, which stores said digital video signals at the said address.

By way of the connection 17, the processor 3 informs the threshold-value circuit 5 that there have now been stored a total of 101 video images by, e.g., generating a counter signal having the value 101; by way of the connection 18, the processor 3 feeds a threshold-value signal to the threshold-value circuit 5 which, e.g., has the value 100; and by way of the connection 19, the processor 3 feeds a signal to the threshold-value circuit 5 which is representative of a time-interval limit, e.g., a time signal having the value 100,000. The threshold-value circuit compares the counter signal with the threshold-value signal, and now observes an exceeding of the threshold-value signal (since 101 > 100). In response to said exceeding of the threshold-value signal, the threshold-value circuit 5 by way of the connection 20 informs the processor 3 of the said exceeding of the threshold-value signal (e.g., by transmitting, by way of the connection 20, an indication signal to the processor 3), whereafter the processor 3 instructs the handset 7 by way of the connection 15 to set up, by way of the signalling channel 21 and the data channel 22 and by way of the base station 41, a telecommunication connection with the incident room 50 (e.g., by feeding, by way of the connection 15, the indication signal to the handset 7, which then transmits said indication signal by way of the signalling channel 21). As soon as this has been done, the processor 3 is informed by the handset 7 by way of the connection 15, and the processor 3 by way of the connection 16 instructs the table memory 4 to generate the memory addresses of the memory 2 where video images have been stored. The processor 3 by way of the connection 13 further generates a so-called read signal and the processor 3 by way of the connection 12 feeds the said memory addresses generated by the table memory 4 to the memory 2, whereafter the digital video signals in question are fed to the telecommunications network 40 by way of the connection 14 and the handset 7 and the output 9 and by way of the data channel 22.

In this network, said digital video signals are fed, by way of the connection 44 and the exchange 43 and the connection 46, to the incident room 50, whereafter the organisation processor 51 determines whether said video images are processed by the first processing circuit 52 or the second processing circuit 53. In addition, the organisation processor 51, by way of the connection 46 and the exchange 43 and the connection 44 and the base station 41 and either the signalling channel 21 or the data channel 22 and by way of the handset 7 and the connection 15, transmits information to the processor 3 on the digital video signals in question having arrived correctly, or not, with the processor 3, in the event of a correctly arrived video image, informing the table memory 4, by way of the connection 16, of the associated address once again having become available, and with the processor 3, in the event of a not correctly arrived video image, giving instruction by way of the connections 12, 13 and 15 to again transmit the video image in question, etc. In this manner, at the initiative of the device 1, upon the memory 2 having attained a certain extent of being filled, there is transmitted (a part of) the contents of memory 2 to the incident room 50.

Since the setting up of the telecommunication connection is substantially done from the side of the device 1, in the above example so-called setting-up means (a part known to those skilled in the art of a handset or of a base station) are substantially located in the device 1 (namely, in the handset 7).
Of course it is also possible to have the setting up of the telecommunication connection substantially take place from the base station 41. In this case, the handset 7 by way of the signalling channel 21 transmits the indication signal, which is fed, by way of so-called signalling connections, to the incident room 50, whereafter the organisation processor 50 determines when the telecommunication connection should actually be setup. As soon as such is the case, the organisation processor, by way of the signalling connections, once again informs the base station 41 accordingly, and the data channel 22 is opened from the base station 41. Since in this case the setting up of the telecommunication connection is substantially done from the side of the telecommunications network 40, the so-called setting-up means (a part known to those skilled in the art of a handset or of a base station) are then substantially located in the base station 41. In this connection, on the one hand there arises the advantage that the said setting-up means need not (entirely) be present in the device 1, which renders the device 1 cheaper, while on the other hand the organisation processor can start to make plans relating to the most efficient transfer, given the fact that still more devices will be present.

Whether in response to a video image arrived in the buffer circuit 6 or not, the threshold-value circuit compares the time signal with the internal counter-position signal, which internal counter-position signal originates, e.g., from the internal clock which was set to zero at the most recently observed exceeding of the threshold-value signal and which every second increases its counter-position signal by the value one. If, e.g., 100,001 seconds have elapsed since the most recently observed exceeding of the threshold-value signal, the threshold-value circuit then observes an exceeding of the counter-position signal (since 100,001 > 100,000). In response to said exceeding of the counter-position signal, the threshold-value circuit 5 by way of the connection 20 informs the processor 3 of the said exceeding of the counter-position signal (e.g., by transmitting an indication signal to the processor 3 by way of the connection 20), whereafter the processor 3 by way of the connection 15 instructs the handset 7 to set up a telecommunication connection, by way of the signalling channel 21 and the data channel 22 and by way of the base station 41, with the incident room 50 (e.g., by feeding, by way of the connection 15, the indication signal to the handset 7 which then transmits said indication signal by way of the signalling channel 21). As soon as this has been done, the processor 3 is informed by the handset 7, by way of the connection 15, and the processor 3 by way of the connection 16 instructs the table memory 4 to generate the memory addresses of the memory 2 where video images have been stored. The processor 3 by way of the connection 13 further generates a so-called read signal and the processor 3 by way of the connection 12 feeds the said memory addresses generated by the table memory 4 to the memory 2, whereafter the digital video signals in question are fed to the telecommunications network 40 by way of the connection 14 and the handset 7 and the output 9 and by way of the data channel 22, etc.

According to the examples described above, the signalling channel 21 operates as a telecommunication connection for transmitting, from the device 1 to the telecommunications network 40, the indication signal. In the event of, e.g., GSM technology, this is of course an efficient solution, though other options should not be ruled out. Thus, it might be possible, e.g., to transmit the indication signal by way of a so-called radio connection from the device 1 to the telecommunications network 40, such as, e.g., a connection based on FM (frequency modulation). In addition, instead of the radio/mobile technology shown, there might also be made use of a permanent network, such as an ISDN network, with the D channel possibly operating as signalling channel and the B channel possibly operating as data channel. Once again, the setting-up means to be applied in this case might then be located either substantially in the device 1 or substantially in the telecommunications network 40.

The temporary storing of video images in the memory 2 results in the further advantage that during the storage there might be applied certain data-compression techniques known to those skilled in the art, as a result of which, in proportion to so-called on-line techniques, compression may be effected in a simpler and/or cheaper and/or more efficient manner.

The data required beyond the video images, such as date/time data and/or speed data, may be transmitted both in combination with the video images from the camera means 30 to the device 1 and separately be fed to the device 1 to be stored there in a combined or individual form, etc.

The system shown in FIG. 1 is an exemplary embodiment only. Basically, the threshold-value circuit 5 and the table memory 4 might be implemented completely in the form of software, and there might be conceived still further threshold-value signals. Also, in the event of a certain choice of the memory 2, the buffer circuit might be avoided, and the way of addressing the memory 2 by way of the table memory 4 might be completely random, in which case, however, the calculation of the counter signal becomes somewhat more complicated.

## Claims

1. System for transmitting digital video signals by way of a telecommunications network (40), which system is provided with
- camera means (30) for generating the digital video signals,
- a device (1) comprising
- an input (8) for receiving the digital video signals,
- an output (9) for coupling to the telecommunications network,
- and control means (3),
**characterised in that** the device is provided with
- a memory (2) for storing digital video signals, each of which corresponds to at least one video image,
- a threshold-value circuit (5) coupled to said control means (3) for generating an indication signal (20)
in response to the exceeding of a threshold-value signal, which is set (18) in the threshold-value circuit by the control means (3), by a counter signal output (17) by said control means (3) and representing the total number of stored video images, or in response to the exceeding of a time-interval limit, which is set (19) in the threshold-value circuit by the control means (3), by a counter-position signal originated from clock means and representing the time elapsed since the most recently observed exceeding of the threshold-value signal by the counter signal or the most recently observed exceeding of the time-interval limit by the counter-position signal,
which system is provided with setting-up means (7, 41) for, in response to the indication signal, setting up, by way of the telecommunications network, a telecommunication connection coupled to the output, with digital video signals stored in the memory of the device, after having been read out, being fed to the output and being transmitted by way of the telecommunication connection set up.

2. System according to claim 1, **characterised in that** the setting-up means (41) are substantially located in the telecommunications network (40), which setting-up means are provided with a control input capable of being coupled to a telecommunication connection for receiving, by way of the telecommunication connection (21), the indication signal, with the threshold-value circuit being provided with an output capable of being coupled to the telecommunication connection.

3. System according to claim 2, **characterised in that** the telecommunication connection forms a part of the telecommunications network.

4. System according to claim 1, **characterised in that** the setting-up means (7) are substantially located in the device (1), which setting-up means are provided with a control input (15) for coupling to an output of the threshold-value circuit (5) for receiving the indication signal (20).

5. System according to claim 1, 2, 3 or 4, **characterised in that** the telecommunication connection to be set up comprises a wireless connection (21,22).

6. Device (1) for a coupling between camera means (30) and a telecommunications network (40), comprising
- an input (8) for receiving digital video signals,
- an output (9) for coupling to a telecommunications network,
- control means (3),
**characterised in that** the device is provided with
- a memory (2) for storing digital video signals, each of which corresponds to at least one video image,
- a threshold-value circuit (5) coupled to said control means (3) for generating an indication signal (20)
in response to the exceeding of a threshold-value signal, which is set (18) in the threshold-value circuit by the control means (3), by a counter signal output (17) by said control means (3) and representing the total number of stored video images, or in response to the exceeding of a time-interval limit, which is set (19) in the threshold-value circuit by the control means (3), by a counter-position signal originated from clock means and representing the time elapsed since the most recently observed exceeding of the threshold-value signal by the counter signal or the most recently observed exceeding of the time-interval limit by the counter-position signal,
- said control means (3) controlling, in response to the indication signal (20), that said digital video signals stored in the memory of the device, after having been read out, are fed to the output and being transmitted, by way of a telecommunication connection coupled to the output.

7. Device according to claim 6, comprising setting-up means (7) for setting up said telecommunication connection, which setting-up means (7) are provided with a control input for coupling to an output of the threshold-value circuit for receiving the indication signal.

8. Device according to claim 6 or 7, **characterised in that** the telecommunication connection to be set up comprises a wireless connection.

## Patentansprüche

1. System zum Übertragen von digitalen Videosignalen über ein Telekommunikationsnetzwerk (40), welches System versehen ist
- mit Kameramitteln (30) zum Erzeugen der digitalen Videosignale,
- mit einer Vorrichtung (1) mit
- einem Eingang (8) zum Empfang der digitalen Videosignale,
- einem Ausgang (9) zum Verbinden mit dem Telekommunikationsnetzwerk, und
- Steuermitteln (3),
**dadurch gekennzeichnet, dass** die Vorrichtung versehen ist
- mit einem Speicher (2) zum Speichern von digitalen Videosignalen, wobei jedes mindestens einem Videobild entspricht,
- mit einem Schwellwertschaltkreis (5), der mit dem besagten Steuermittel (3) verbunden ist, um ein Hinweissignal
- - in Antwort auf das Überschreiten eines Schwellwertsignals, welches in dem Schwellwertschaltkreis durch die Steuermittel (3) gesetzt (18) wird, durch ein Zählersignal zu erzeugen, welches von den besagten Steuermitteln (3) ausgegeben wird und die Gesamtanzahl von gespeicherten Videobildern angibt, oder
- - in Antwort auf das Überschreiten eines Zeitintervalllimits, welches in dem Schwellwertschaltkreis durch die Steuermittel (3) gesetzt wird, durch ein Zählerpositionssignal zu erzeugen, welches von Taktmitteln abstammt und die Zeit angibt, die seit dem zuletzt beobachteten Überschreiten des Schwellwertsignals durch das Zählersignal oder dem zuletzt beobachteten Überschreiten des Zeitintervalllimits durch das Zählerpositionssignal vergangen ist,
welches System mit Aufsetzmitteln (7, 41) versehen ist, um in Antwort auf das Hinweissignal eine Telekommunikationsverbindung über das Telekommunikationsnetzwerk aufzusetzen, die mit dem Ausgang verbunden ist, wobei digitale Videosignale, die in dem Speicher der Vorrichtung gespeichert sind, nachdem sie ausgelesen worden sind, dem Ausgang zugeführt werden und über die aufgesetzte Telekommunikationsverbindung übertragen werden.

2. System nach Anspruch 1, **dadurch gekennzeichnet, dass** die Aufsetzmittel (41) im wesentlichen in dem Telekommunikationsnetzwerk (40) angeordnet sind, welche Aufsetzmittel mit einem Steuereingang versehen sind, der fähig ist, mit einer Telekommunikationsverbindung verbunden zu werden, um über die Telekommunikationsverbindung (21) das Hinweissignal zu empfangen, wobei der Schwellwertschaltkreis mit einem Ausgang versehen ist, der mit der Telekommunikationsverbindung verbunden werden kann.

3. System nach Anspruch 2, **dadurch gekennzeichnet, dass** die Telekommunikationsverbindung einen Teil des Telekommunikationsnetzwerkes bildet.

4. System nach Anspruch 1, **dadurch gekennzeichnet, dass** die Aufsetzmittel (7) im wesentlichen in der Vorrichtung (1) angeordnet sind, welche Aufsetzmittel mit einem Steuereingang (15) zum Verbinden mit einem Ausgang des Schwellwertschaltkreises (5) zum Empfang des Hinweissignals (20) versehen sind.

5. Systems nach Anspruch 1, 2, 3 oder 4, **dadurch gekennzeichnet, dass** die Telekommunikationsverbindung, die aufgesetzt werden soll, eine drahtlose Verbindung (21, 22) umfasst.

6. Vorrichtung (1) für eine Verbindung zwischen Kameramitteln (30) und einem Telekommunikationsnetzwerk (40), umfassend
- einen Eingang (8) zum Empfang von digitalen Videosignalen,
- einen Ausgang (9) zum Verbinden mit einem Telekommunikationsnetzwerk,
- Steuermittel (3),
**dadurch gekennzeichnet, dass** die Vorrichtung versehen ist
- mit einem Speicher (2) zum Speichern von digitalen Videosignalen, wobei jedes mindestens einem Videobild entspricht,
- mit einem Schwellwertschaltkreis (5), welcher mit dem besagten Steuermittel (3) verbunden ist, um mindestens ein Hinweissignal (20) zu erzeugen
-- in Antwort auf das Überschreiten eines Schwellwertsignals, welches in dem Schwellwertschaltkreis durch Steuermittel (3) gesetzt wird (18), durch ein Zählersignal, welches durch die besagten Steuermittel (3) ausgegeben (17) wird und die gesamte Anzahl der gespeicherten Videobilder angibt, oder
-- in Antwort auf das Überschreiten einer Zeitintervallgrenze, welche in dem Schwellwertschaltkreis durch die Steuermittel (3) gesetzt worden ist (19), durch ein Zählerpositionssignal, welches von Taktmitteln abstammt und die Zeit darstellt, die seit dem zuletzt beobachteten Überschreiten des Schwellwertsignäls durch das Zählersignal oder die zuletzt beobachtete Überschreitung des Zeitintervalllimits durch das besagte Zählerpositionssignal abgelaufen ist,
- wobei die besagten Steuermittel (3) in Antwort auf das Hinweissignal (20) steuern, dass die besagten digitalen Videosignale, die in dem Speicher der Vorrichtung gespeichert sind, nachdem sie ausgelesen worden sind, dem Ausgang zugeführt werden und über eine Telekommunikationsverbindung übertragen werden, die mit dem Ausgang verbunden ist.

7. System nach Anspruch 6, **dadurch gekennzeichnet, dass** Aufsetzmittel (7) vorgesehen sind, um die besagte Telekommunikationsverbindung aufzusetzen, wobei diese Aufsetzmittel (7) mit einem Steuereingang versehen sind, um mit einem Ausgang des Schwellwertschaltkreises verbunden zu werden, um das Hinweissignal zu empfangen.

8. System nach Anspruch 6 oder 7, **dadurch gekennzeichnet, dass** die Telekommunikationsverbindung, die aufzusetzen ist, eine drahtlose Verbindung umfasst.

## Revendications

1. Système pour transmettre des signaux vidéo numériques au moyen d'un réseau de télécommunication (40), lequel système comporte:
- des moyens formant caméra (30) pour produire les signaux vidéo numériques,
- un dispositif (1) comprenant
- une entrée (8) pour recevoir les signaux vidéo numériques,
- une sortie (9) destinée à être couplée au réseau de télécommunication,
- et des moyens de commande (3),
**caractérisé en ce que** le dispositif comporte:
- une mémoire (2) pour mémoriser des signaux vidéo numériques, dont chacun correspond à au moins une image vidéo,
un circuit à valeur de seuil (5) couplé auxdits moyens de commande (3) pour produire un signal d'indication (20), en réponse au dépassement d'un signal de la valeur de seuil, qui est réglée (18) dans le circuit à valeur de seuil par des moyens de commande (3), un signal de sortie de compteur (17) par lesdits moyens de commande (3) et représentant le nombre total d'image vidéo numérisées, ou
en réponse au dépassement d'une limite d'intervalle de temps, qui est réglée (19) dans le circuit à valeur de seuil par les moyens de commande (3), par un signal de position de compteur délivré par des moyens d'horloge et représentant le temps écoulé depuis le dépassement le plus récemment observé du signal de la valeur de seuil par le signal du compteur ou le dépassement le plus récemment observé de la limite d'intervalle de temps dans le signal de position du compteur,
lequel système est pourvu de moyens d'établissement (7, 41) pour établir, en réponse au signal d'indication, et par l'intermédiaire du réseau de télécommunication, une connexion de télécommunication couplée à la sortie, les signaux vidéo numériques mémorisés dans la mémoire du dispositif étant envoyés, après avoir été lus, à la sortie et étant transmis par l'intermédiaire du montage de connexion de télécommunication.

2. Système selon la revendication 1, **caractérisé en ce que** les moyens d'établissement (41) sont situés essentiellement dans le réseau de télécommunication (40), lesquels moyens d'établissement sont équipés d'une entrée de commande pouvant être couplée à une connexion de télécommunication pour recevoir le signal d'indication, par l'intermédiaire de la connexion de télécommunication (21), le circuit à valeur de seuil étant pourvu d'une sortie apte à être couplée à la connexion de télécommunication.

3. Système selon la revendication 2, **caractérisé en ce que** la connexion de télécommunication forme une partie du réseau de télécommunication.

4. Système selon la revendication 1, **caractérisé en ce que** les moyens d'établissement (7) sont disposés essentiellement dans le dispositif (1), lesquels moyens d'établissement sont pourvus d'une entrée de commande (4) destinée à être couplée à une sortie du circuit à valeur de seuil (5) pour la réception du signal d'indication (20).

5. Système selon la revendication 1, 2, 3 ou 4, **caractérisé en ce que** la connexion de télécommunication devant être établie comprend une connexion sans fil (21, 22) .

6. Dispositif (1) pour établir un couplage entre des moyens formant caméra (30) et un réseau de télécommunication (40), comprenant:
- une entrée (8) pour recevoir les signaux vidéo numériques,
- une sortie (9) destinée à être couplée au réseau de télécommunication,
- des moyens de commande (3),
**caractérisé en ce que** le dispositif comporte:
- une mémoire (2) pour mémoriser des signaux vidéo numériques, dont chacun correspond à au moins une image vidéo,
un circuit à valeur de seuil (5) couplé auxdits moyens de commande (3) pour produire un signal d'indication (20), en réponse au dépassement d'un signal de la valeur de seuil, qui est réglée (18) dans le circuit à valeur de seuil par des moyens de commande (3), un signal de sortie de compteur (17) par lesdits moyens de commande (3) et représentant le nombre total d'image vidéo numérisées, ou en réponse au dépassement d'une limite d'intervalle de temps, qui est réglée (19) dans le circuit à valeur de seuil par les moyens de commande (3), par un signal de position de compteur délivré par des moyens d'horloge et représentant le temps écoulé depuis le dépassement le plus récemment observé du signal de la valeur de seuil par le signal du compteur ou le dépassement le plus récemment observé de la limite d'intervalle de temps dans le signal de position du compteur,
lesdits moyens de commande (3) commandant, en réponse au signal d'indication (20), le fait qu'après avoir été lus lesdits signaux vidéo numériques mémorisés dans la mémoire du dispositif sont envoyés à la sortie et sont émis par l'intermédiaire d'une connexion de communication couplée à la sortie.

7. Dispositif selon la revendication 6, comprenant des moyens d'établissement (7) pour régler ladite connexion de télécommunication, lesquels moyens d'établissement (7) sont équipés d'une entrée de commande pour le couplage à une sortie du circuit à valeur de seuil pour recevoir le signal d'indication.

8. Dispositif selon la revendication 5 ou 6, **caractérisé en ce que** la connexion de télécommunication devant être établie comprend une connexion sans fil.
